# EUROPEAN PATENT APPLICATION

(11) **EP 1 939 804 A1**
(43) Date of publication of application: **02.07.2008**
(21) Application number: 07024905.7
(22) Date of filing: 21.12.2007
(51) Int. Cl.: G06Q 30/00, H04M 3/42

(54) **Using telecom data to enhance web interaction**

(30) Priority: 27.12.2006 US 616685
(71) Applicant: Nortel Networks Limited, St Laurent, Québec H4S 2A9 (CA)
(72) Inventor: Sylvain, Dany, Gatineau Quebec J8T 6A6 (CA)
(74) Representative: Boyce, Conor

(57) **Abstract**

A search server is provided to conduct a search in response to a web request received from a computing terminal and deliver a web page, including any search results, back to the computing terminal in response to the web request. Telecom data obtained by the search server is used to access supplemental information, which is used to retrieve the web page information used to generate the web page. The supplemental information may be used to select advertisements for the web page. The search server may also use the supplemental information to modify or further narrow a search query, which was provided in the web request, to obtain search results based on the supplemental information and the search query. The supplemental information may be selected based on telecom data associated with the user or the computing terminal from which the request or search query was received.

## Description

### Field of the Invention

The present invention relates to telecommunications, and in particular to using telecom data to enhance interaction, including web search results and ad insertion.

### Background of the Invention

The Internet has evolved into the most common interactive information resource in the world. Millions of people each day access the Internet to search for virtually any type of information. Searching for information via the Internet is generally triggered when a user enters a search query in a browser running on a computing terminal and instructs the browser to initiate the search. The browser sends the search query to a web-based search server via the Internet. The search engine of the search server will then search any number of search databases, including other servers, to identify information matching the search query and then send appropriate search results back to the browser, which will display the search results to the user. The search results generally include links associated with uniform resource locators (URLs) that identify the location of the actual information corresponding to the search results on the various search databases. Within the search results, the links are associated with portions of the actual information to allow the user to select those results of most interest. The user may select a link of interest to obtain the actual information associated with a given link.

Given the global reach of the Internet, search results are independent of the user's actual location, unless the search query includes a location qualifier. As such, most search results are general, and not location based. Many searches for merchants and service providers would result in more useful information, if the searches included a location qualifier that generally corresponded to the user's location. Unfortunately, browsers are not able to readily determine the location of the user and construct search queries with location qualifiers.

Further, search engine providers, such as Yahoo^{®} and Google^{®}, provide advertising along with the search results that are sent to the user in response to a search query. The advertising is often selected based on the search query or the search results; however, the advertising, like the search results, are not selected based on the user's location, unless there is a location qualifier in the search query. Being able to focus advertising based on the user's location provides greater value to advertisers, and thus carriers pay a price premium to the benefit of the search providers. Unfortunately, search engine providers are unable to take advantage of this premium advertising and the user does not receive the benefits of the premium advertising unless a location qualifier is manually provided by the user.

Accordingly, there is a need for an effective and efficient technique to obtain location information associated with a user and use the location information when providing search results and advertising to a user in response to a search query.

### Summary of the Invention

A search server is provided to conduct a search in response to a web request received from a computing terminal and deliver a web page, including any search results, back to the computing terminal in response to the web request. Telecom data obtained by the search server is used to access supplemental information, which is used to retrieve the web page information used to generate the web page. The supplemental information may be used to select advertisements for the web page. The search server may also use the supplemental information to modify or further narrow a search query, which was provided in the web request, to obtain search results based on the supplemental information and the search query. The supplemental information may be selected based on telecom data associated with the user or the computing terminal from which the request or search query was received.

### Brief Description of the Drawing Figures

The accompanying drawing figures incorporated in and forming a part of this specification illustrate several aspects of the invention, and together with the description serve to explain the principles of the invention.
FIGURE 1 is a block representation of a communication environment according to one embodiment of the present invention.
FIGURE 2 illustrates a web page including a click-to-call tag displayed on a web browser.
FIGURE 3 illustrates a pop-up window provided upon selecting the click-to-call tag provided in the web page illustrated in Figure 2.
FIGURE 4 is a flow diagram illustrating a web search scenario where a cookie is stored according to one embodiment of the present invention.
FIGURE 5 is a flow diagram illustrating a web search scenario where the cookie is used to modify search queries and select advertisements according to one embodiment of the present invention.
FIGURE 6 is a flow diagram illustrating a web search scenario where supplemental data is obtained from call logs according to one embodiment of the present invention.
FIGURE 7 is a block representation of a computing terminal according to one embodiment of the present invention.
FIGURE 8 is a block representation of a search server according to one embodiment of the present invention.
FIGURE 9 is a block representation of a telecom server according to one embodiment of the present invention.
FIGURE 10 is a block representation of a service node according to one embodiment of the present invention.

### Detailed Description of the Preferred Embodiments

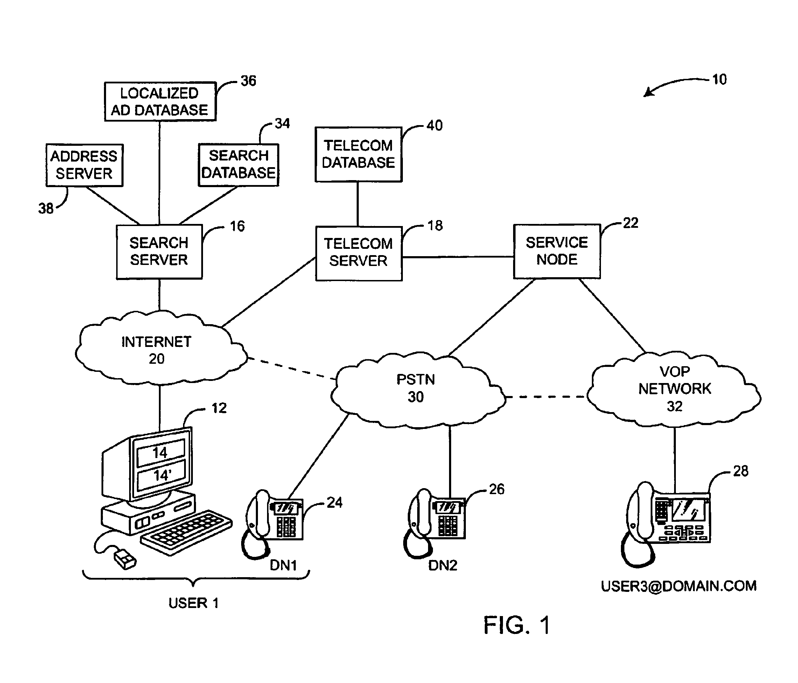

Figure 1 depicts a communication environment 10 according to one embodiment of the present invention. A user (User 1) is associated with a computing terminal 12, which provides a web client 14 having a web browser. The web client 14 provides standard browsing functionality and is capable of generating and sending requests to any number of web servers, such as a search server 16 and a telecom server 18, over the Internet 20 or like communication network. As those skilled in the art will appreciate, the search server 16 is capable of accessing information in response to the requests and sending the information back to the web client 14. The information is typically provided in the form a web page, which may include search results responsive to the specific requests, as well as advertising, which may or may not be related to the specific requests.

In many instances, the search server 16 will access search results and advertising based on the requests. Targeted advertising, such as that based on the requests, is typically much more effective than general advertising that bears no relation to the user or the requests. Another type of targeted advertising that has proven highly effected is advertising based on a specific or general location of the user or a location relevant to a user's search request. When users incorporate location information into their requests, the search server 16 may be able to access advertising targeted for the user's geographic locale or a locale of particular interest. The location information in the request may be also used by the search server 16 to provide search results that are tailored to the given location information. Again, the location may be related to the user's specific or general location as well as a particular location of interest. Thus, location information is often beneficial in narrowing search results as well as providing targeted advertising based on the location of the user or a location of interest to the user. The present invention provides unique techniques to automatically provide relevant location information to the search server 16, which may use the location information to provide search results, targeted advertising, or a combination thereof. Details are provided further below after a discussion of a technique to initiate voice sessions, including telephony calls, from a web page.

As the Internet and associated web services evolve, there is a movement to initiate telephony calls from certain web applications. In click-to-call (C2C) scenarios, a call tag is provided in a web page. When a user selects the call tag, the web client 14 may initiate a telephony call to a destination associated with the call tag, wherein a voice session is automatically established.

The web client 14 is configured to receive call indicia when a call tag is selected by a user of the computing terminal 12. The call indicia provide information associated with a remote party with which a call is being requested by the user. If the computing terminal 12 can support the telephony call, the web client 14 may instruct an associated communication client 14' to initiate the call toward the remote party using the call indicia. Alternatively, the web client 14 may use the call indicia along with user indicia provided by the user and indirectly establish a call with the remote party using a telephony terminal other than the computing terminal 12. Based on user indicia or other criteria, the web client 14 may select between an indirect or direct initiation of the call in a dynamic fashion, and then effect initiation of the call, either directly or indirectly. Indirect call initiation generally entails the web client 14 directly or indirectly instructing a call control entity to take the requisite steps to initiate a call between the remote party and another telephony terminal associated with the user.

In an exemplary click-to-call scenario, the web client 14 of the computing terminal 12 sends to the telecom server 18 a request to initiate a call between two or more endpoints, where one of the endpoints, like the computing terminal 12, is associated with the user. The request will generally identify a source and a destination corresponding to the respective endpoints for the call. The request is then sent to a service node 22, which will take the necessary steps to establish the call between the two endpoints. Alternatively, the web client 14 of the computing terminal 12 may send the request directly to the service node 22 to avoid passing the request through the telecom server 18. Further detail on establishing such calls is provided in U.S. application serial number 11/316,431 filed December 22, 2005 and co-filed European Application No. claiming priority from U.S. application serial number 11/615,294 filed December 22, 2006 (Ref: P87883ep00).

As illustrated, the available endpoints include a first terminal 24, a second terminal 26, and a third terminal 28. The first terminal 24 is associated with User 1 and may be considered a source for the call, even though the call is not originated from the first terminal 24 in a traditional fashion. The second and third terminals 26, 28 are remote endpoints associated with destinations with which User 1 wants to communicate. For example, the second and third terminals 26, 28 may correspond to destinations associated with the call tags provided in the search results or advertising provided in the web page. The first terminal 24 is associated with directory number DN1, the second terminal 26 is associated with directory number DN2, and the third terminal 28 is associated with a uniform resource locator (URL) user3@domain.com. The concepts of the present invention are applicable to circuit-switched and packet based telephony in wired or wireless access environments.

As depicted, only the first and second terminals 24, 26 are depicted as being supported by the public switched telephone network (PSTN) 30, which may represent any type of wired or wireless network supporting circuit-switched communications. The third terminal 28 is depicted as being supported by a voice-over-packet (VoP) network 32, such as the Internet or like packet-based network, which supports packet-based communications. The PSTN 30 and the VoP network 32 are considered to include any necessary access networks as well as have the appropriate interworking infrastructure to support communications therebetween.

The web client 14 of the computing terminal 12 may send a request for a web page to the search server 16, which will identify information responsive to the request, generate a web page with the information, and send the web page back to the computing terminal 12. The information in the web page may include search results responsive to a specific search query, advertisements provided along with the search results, and the like. As illustrated in Figure 1, the search server 16 may access a search database 34 to obtain information responsive to the request or a search query within the request. The search server 16 may also access a localized ad (advertising) database 36 to select advertisements to provide in the web page.

As with the information responsive to the request or search query, all or certain of the advertisements may be selected based on the request or search query.

For the present invention, telecom data is used by the search server 16 to access supplemental information. The supplemental information is then used to control the information used to generate the web page. For example, the supplemental information may be used to select advertisements to present to the user. The search server 16 may also use the supplemental information to modify or further narrow the search query to obtain search results based on the supplemental information and the search query. The supplemental information may be selected based on telecom data associated with the user or the computing terminal 12 from which the request or search query was received.

Once the telecom data is obtained, the search server 16 may access certain entities to obtain the supplemental information based on the telecom data, and access the same or other entities to obtain the information responsive to the request or search query, advertisements, or the like. Again, such information may be selected in whole or in part based on the supplemental information. For example, the telephony address information in the form of directory numbers or URLs may be sent to an address server 38 to obtain supplemental information, such as specific or general location information associated with the telephony address information.

The search server 16 may then use the location information along with the search query provided by the user to further refine a search of the search database 34. As such, the search results may be limited to or at least relate to the location information, which was obtained based on the telecom data. Advertisements may also be selected from the localized ad database 36 based on the location information, where the location information may be associated with the user or an entity with whom the user has engaged in a telephony call, depending on what telecom data was obtained by the search server 16. Thus, targeted advertisements based on a specific or general location of the user or party with whom the user has engaged in a telephone call may be delivered in the web page provided to the user.

The supplemental information obtained by the search server 16 is not limited to location information and may relate to virtually any type of information capable of being derived or selected based on telecom data and useful in modifying search queries, selecting advertisements, or the like. For example, the telecom data may be used to select supplemental information bearing on certain interests of the user. If call log information indicates that one or more calls were made to a given entity or multiple entities that relate to or are associated with a certain interest, activity, business type, or the like, the supplemental information obtained by the search server 16 may bear on that interest, activity, business type, or the like.

Thus, the search server 16 may recognize that the user has made calls to or received calls from one or more hotels based on determining the type of business associated with other parties involved in these calls. Based on the supplemental information related to hotels, the search server 16 may select and present advertisements for certain hotels or travel related businesses and services to the user in response to web page requests. In essence, the search server 16 will use the supplemental information to formulate a query for the localized ad database 36 to retrieve the advertisements. If the location information for the user can be derived from the telecom data, the advertisements may also include those for travel agents, rental car agencies, airports, or the like, which are proximate to the user. If travel destination information for the hotels can be derived from the telecom data, the advertisements may also include those for travel agents, rental car agencies, hotels, or the like, which are proximate to the travel destination.

Further, any search queries provided in a web page request may be modified based on the supplemental information. In essence, the search server 16 will combine the search query provided by the user with the supplemental information and conduct one or more searches of the search database 34 or like databases. Basic search queries for weather, clothing, hotels, travel agents, rental car agencies, airports, or the like may be modified based on the user's location or intended travel destination.

Notably, the supplemental information used to modify search queries is not limited to location related information.

The telecom data is not limited to telecom data of the user, but may include any telecom data maintained for or in any way associated with the user. The telecom data associated with the user may include telephony call or address related information for the user or parties with whom the user has engaged in a telephony call. In particular, the telecom data may relate to information associated with telephony calls made or received by the user; telephony addresses, such as directory numbers, URLs, and caller identification information for terminals associated the user or other parties; incoming or outgoing call log information or any information derived from such information. Call logs and other telecom data may be maintained in various locations, such as a telecom database 40, which is accessible by the telecom server 18 or the search server 16. Call logs generally maintain lists of telephony addresses, caller identification information, call times, and call lengths associated with incoming and outgoing calls.

The telecom data may be stored at the search server 16, an entity accessible to the search server 16, or may be stored on the computing terminal 12 and provided to the search server 16 in the request for the web page or other communication. Alternatively, the telecom data may be obtained from remote entities such as the telecom server 18 by the computing terminal 12 or the search server 16.

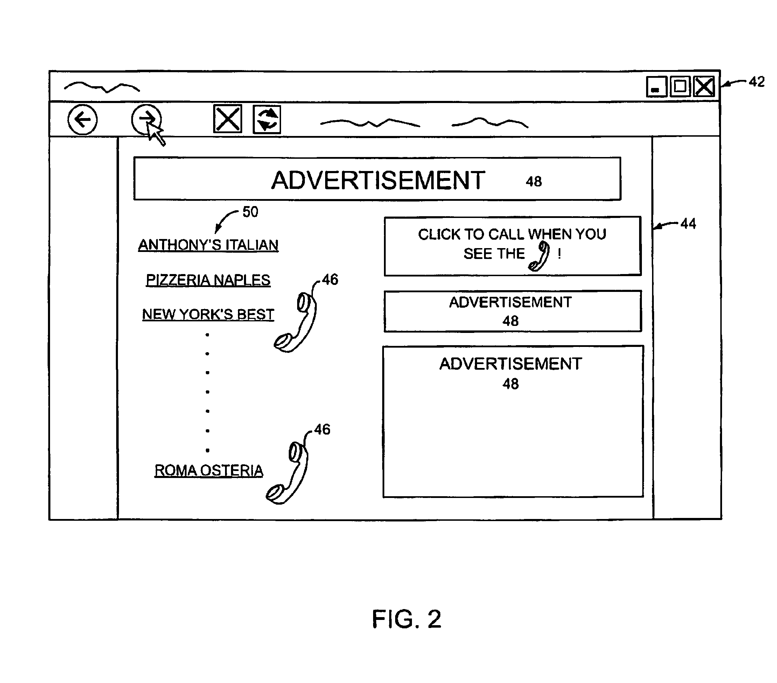

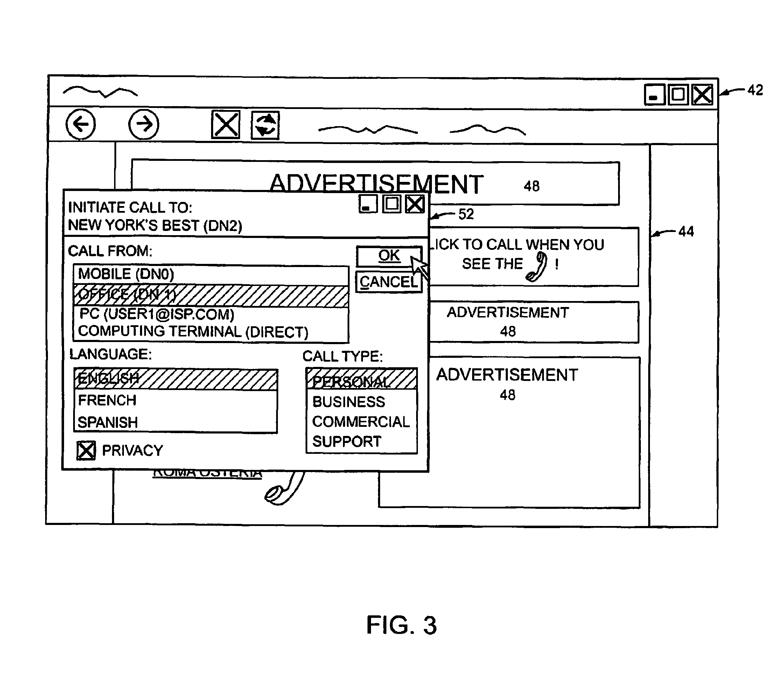

The following description provides several examples of how the present invention may be employed. Although certain of these examples incorporate click-to-call techniques, the invention is not limited to environments or scenarios where click-to-call functionality is used or available. Prior to providing communication flows for three examples, an overview of click-to-call functionality from the perspective of the user or computing terminal 12 is provided in association with Figures 2 and 3. This overview corresponds to the type of interface that could be provided with the communication flow examples that follow.

With reference to Figures 2 and 3, a user interface is provided by the web client 14 where a click-to-call tag in a web page is selected (Figure 2) and a pop-up window is provided for the user to select an associated endpoint from which a voice session should be established (Figure 3). With reference to Figure 2, a web browser interface 42 provided by the web client 14 is capable of receiving and displaying a web page 44 on the computing terminal 12. Embedded in the web page 44 is a click-to-call tag 46, advertisements (ads) 48, and search results 50, which were provided in response to a search request for "Italian Restaurant." As illustrated, the two click-to-call tags 46 are associated with the search results "New York's Best" and "Roma Osteria." Notably, other click-to-call tags 46 could have been provided in association with one or more of the advertisements 48.

The click-to-call tags 46 are provided in the web page 44 to allow the user to simply click or otherwise select a given click-to-call tag 46 and establish a call with a remote endpoint, such as the second or third terminals 26, 28, using associated call indicia, which may include the directory number or URL associated with the second and third terminals 26, 28. Since many computing terminals 12 cannot support the call or the user may desire to use the first telephony terminal 24 for the call, selecting the click-to-call tag 46 may trigger sending a query to the user for user indicia to assist in establishing the call with the remote endpoint.

With reference to Figure 3, the web client 14 may present a pop-up window 52 to the user in response to determining that the click-to-call tag 46 was selected. The content of the pop-up window 52 may be provided by the search or telecom servers 16, 18 or the computing terminal 12. The pop-up window 52 may identify the remote endpoint by name or by telephony address in a general or specific fashion. Assuming the click-to-call tag 46 for "New York's Best" was selected, the selected remote endpoint may correspond to a general network address or directory number (DN2), as illustrated, for the New York's Best restaurant. The type of communication address may correspond to a directory number, a Session Initiation Protocol (SIP) address, a peer-to-peer address, or a uniform resource locator (URL). The second and third terminals 26, 28 may be associated with different entities or may represent specific endpoints associated with a general, remote endpoint.

The pop-up window 52 may also allow the user to select a direct or indirect method for establishing the call, and if indirect, another endpoint associated with the user to use for the call. As illustrated, the user is provided with a choice to initiate the call from an associated mobile terminal associated with directory number DN0; the first terminal (office) 24 associated with directory number DN1; a PC associated with address user1@isp.com; or the computing terminal 12. Assume that the first terminal 24 is selected to use for the call, as indicated by the highlighting. Selecting the mobile, office, or PC terminals would result in an indirect establishment of a call from the selected endpoint to the remote endpoint 26, whereas selection of the computing terminal 12 would result in a direct initiation of a call from the computing terminal 12 using the communication client 14'.

The pop-up window 52 is configured to allow the user to readily provide any user indicia to assist with initiating the call. The user indicia may take various forms including source information and context information. The source information corresponds to the particular endpoint of the user to use when establishing the call, while the context information provides information bearing on a context associated with the call. The context information may vary significantly from one application to another. As illustrated, the context information may identify a preferred language to associate with the call, whether the call is private, and the type of call being established. The type of call may identify the call as a personal, business, commercial, support call, or the like. When the user selects "OK," any appropriate source, destination, and context information is sent to the telecom server 18 in association with a request to initiate a call.

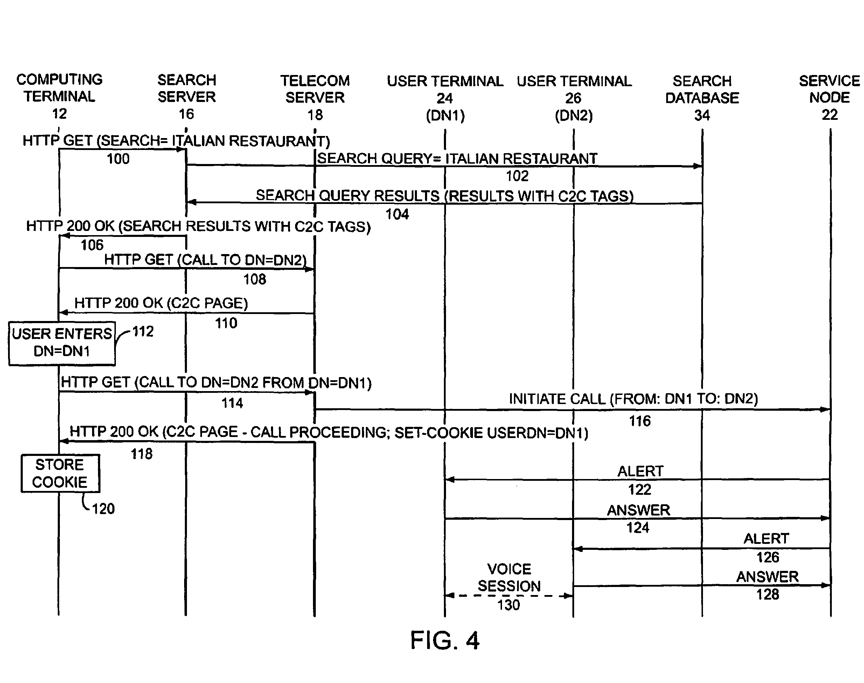

With reference to Figure 4, a communication flow is provided wherein a telecom cookie is stored on the computing terminal 12 when a C2C call is initiated. The telecom cookie may store various telecom information, including a telephony address, such as a directory number or URL associated with the user, the computing terminal 12, or another user terminal that is used by the user, such as user terminal 24. In this example, the telecom cookies will associate the directory number DN1 with the user. The directory number DN1 is associated with user terminal 24, as illustrated in Figure 1.

Initially, assume the user opens a web browser provided by the web client 14 and types in the search query "Italian Restaurant." When the user initiates the search, the computing terminal 12, and in particular the web browser, will send a Hypertext Transfer Protocol (HTTP) GET message with the search query (Italian Restaurant) to the search server 16 (step 100). The HTTP GET message is a form of request, which will trigger the search server 16 to ultimately provide a web page including the search results back to the computing terminal 12 for presentation to the user.

The search server 16 will send a search query for "Italian Restaurant" to the search database 34 (step 102), which will provide a search for "Italian Restaurant" and provide search query results back to the search server 16 (step 104). In this example, assume the search results correspond to those provided in Figure 2, such that click-to-call tags 46 are associated with certain of the search results. The search server 16 will provide the results with the click-to-call tags 46 in a web page 44 to the computing terminal 12 (step 106). The web page is provided in an HTTP 200 OK message.

Assuming the user selects one of the click-to-call tags 46, the computing terminal 12 will send an HTTP GET message to initiate a call to directory number DN2 toward the telecom server 18 (step 108). Directory number DN2 is associated with user terminal 26, and in this example, corresponds to New York's Best Italian Restaurant. Recognizing the HTTP GET message as a request to initiate a call to directory number DN2, the telecom server 18 will generate a click-to-call web page 52, and deliver the web page 52 to the computing terminal 12 in an HTTP 200 OK message (step 110). The click-to-call web page 52 provided to the computing terminal 12 may appear as that illustrated in Figure 3, wherein the click-to-call web page 52 allows the user to enter sufficient information to identify the terminal from which the call should be initiated. In this example, the user selects user terminal 24, directory number DN1, or enters directory number DN1 into the click-to-call web page 52, and clicks OK (step 112). In response, the computing terminal 12 will send an HTTP GET message to initiate a call from directory number DN1 to directory number DN2 toward the telecom server 18 (step 114). At this point, the telecom server 18 will send an Initiate Call message toward the service node 22 to initiate a call from directory number DN1 to directory number DN2 (step 116).

The telecom server 18 may also generate a click-to-call web page indicating that the call is proceeding, and send the click-to-call web page to the computing terminal 12 in an HTTP 200 OK message (step 118). Notably, during the click-to-call processing, the telecom server 18 has identified user terminal 24, or at least directory number DN1, as being associated with computing terminal 12 and perhaps User 1. In one embodiment of the present invention, the telecom server 18 will generate a cookie and send the cookie to the computing terminal 12, perhaps in association with sending the click-to-call web page that indicates the call is proceeding. The computing terminal 12 will store the cookie for subsequent use (step 120).

Meanwhile, the service node 22 will initiate the necessary call or session signaling to establish a voice session between user terminal 24 and user terminal 26, which are associated with directory numbers DN1 and DN2, respectively. The pseudo communication flow messages follow. The service node 22 may send an Alert message toward user terminal 24 (step 122), which when answered by User 1 will send an Answer message back to the service node 22 (step 124). The service node 22 will then send an Alert message toward user terminal 26 (step 126), which when answered by the remote party will send an Answer message back to the service node 22 (step 128). Once both user terminal 24 and user terminal 26 have been answered, a voice session is established therebetween (step 130). Those skilled in the art will recognize various techniques for facilitating third party call control to allow the service node 22 to interact directly or indirectly with various call control entities to effectively establish the voice session between user terminals 24 and 26.

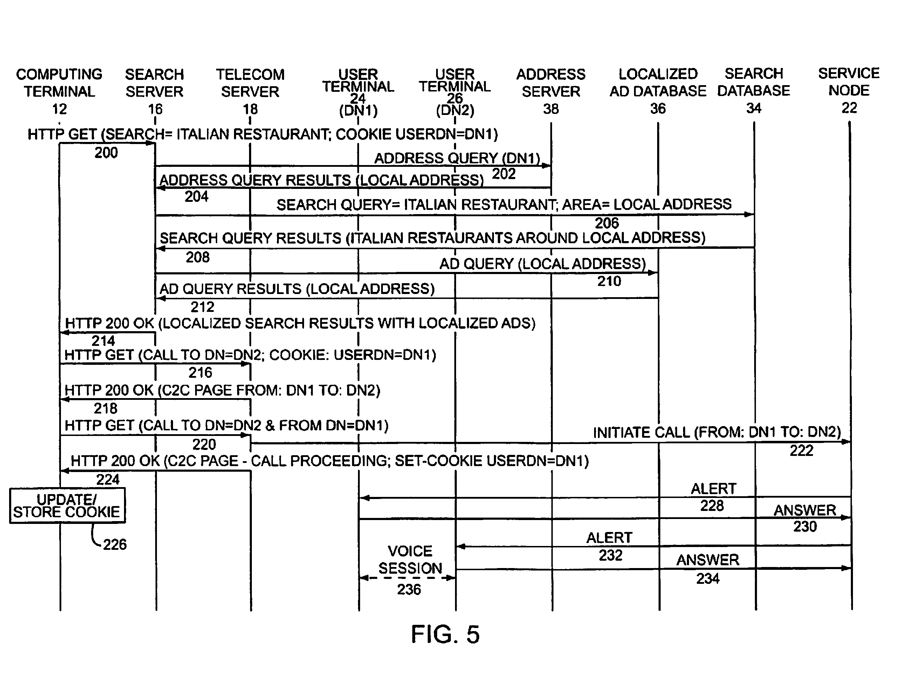

Turning now to Figure 5, the telecom cookie stored as a result of the communication flow of Figure 4 is used to modify search queries as well as select advertisements in response to web page requests. Assume the user enters a search query for "Italian Restaurant" in the web browser of the web client 14. In response, the computing terminal 12 will send an HTTP GET message with the search query "Italian Restaurant," along with the telecom cookie or information provided therein to the search server 16 (step 200). In particular, the telecom cookie information will identify directory number DN1 as a telephony address associated with the user of the computing terminal 12. In this instance, the search server 16 is configured to operate according to one embodiment of the present invention. As such, the search server 16 will recognize that the telecom cookie information was provided along with the search query, and will send an address query with the directory number DN1 to the address server 38 (step 202). The address server 38 will identify a local address associated with directory number DN1, and will provide the local address as an address query result to the search server 16 (step 204). The local address may be a specific address associated with directory number DN1, or may be more general location information associated with directory number DN1. For example, the local address may be the address of the user, the user's place of business, as well as a geographic region, such as a neighborhood, district, town, city, state, or the like.

The search server 16 will send a search query to the search database 34 based on the search query provided by the user, as well as based on the local address information provided by the address server 38 (step 206). Thus, the search query provided by the user is modified with supplemental information derived from telecom data by the search server 16. The search database 34 will provide a search based on the search query (Italian Restaurant) and the local address information, and provide search query results back to the search server 16 (step 208). In this instance, the search query results may include all the Italian restaurants around or associated with the local address.

Additionally, the search server 16 may use the local address information obtained from the address server 38 based on the telecom data to send an ad query to the localized ad database 36 (step 210). The localized ad database will identify ads based on the local address information, and provide ad query results back to the search server 16 (step 212). The search server 16 may then generate a web page based on the search query results retrieved from the search database 34, as well as the ad query results retrieved from the localized ad database 36. The web page may include other information retrieved from the search database 34, the localized ad database 36, or any other database, in addition to the search query results and the ad query results identified above. Once the web page is generated, the search server 16 will send the web page to the computing terminal 12 in an HTTP 200 OK message (step 214). Again, the web page will include at least the localized search results along with the localized ads, retrieved from the search database 34 and localized ad database 36, respectively.

Assuming one of the search results is associated with a click-to-call tag 46 and the user selects the click-to-call tag 46, the computing terminal 12 may send an HTTP GET message to initiate a call to the destination associated with the click-to-call tag. Again, assume the destination is associated with directory number DN2. As such, the HTTP GET message sent to the telecom server 18 will identify directory number DN2 as the destination for the call, and may provide the telecom cookie information, which indicated that directory number DN1 is associated with the user, or at least the computing terminal 12 (step 216). The telecom server 18 will generate a click-to-call web page for delivery to the computing terminal 12. In this example, the telecom server 18 will recognize that directory number DN1 is an associated directory number for the user or computing terminal 12, and may set directory number DN1 as a default origination number for the call in the click-to-call web page 52. The click-to-call web page 52 is then sent to the computing terminal 12 (step 218). When the user decides to initiate the call, the computing terminal 12 will send an HTTP GET message to initiate the call from directory number DN1 to directory number DN2 to the telecom server 18 (step 220), which will send an Initiate Call message to the service node 22 as described above (step 222).

The telecom server 18 may also send a click-to-call web page indicating that the call is proceeding to the computing terminal 12 in an HTTP 200 OK message (step 224). The telecom server 18, as a matter of course, may update or generate a new telecom cookie, which is provided to the computing terminal 12 in the click-to-call web page. The computing terminal 12 will update or store the telecom cookie (step 226).

Meanwhile, the service node 22 will initiate the necessary call or session signaling to establish a voice session between user terminal 24 and user terminal 26, which are associated with directory numbers DN1 and DN2, respectively. The pseudo communication flow messages follow. The service node 22 may send an Alert message toward user terminal 24 (step 228), which when answered by User 1 will send an Answer message back to the service node 22 (step 230). The service node 22 will then send an Alert message toward user terminal 26 (step 232), which when answered by the remote party will send an Answer message back to the service node 22 (step 234). Once both user terminal 24 and user terminal 26 have been answered, a voice session is established therebetween (step 236).

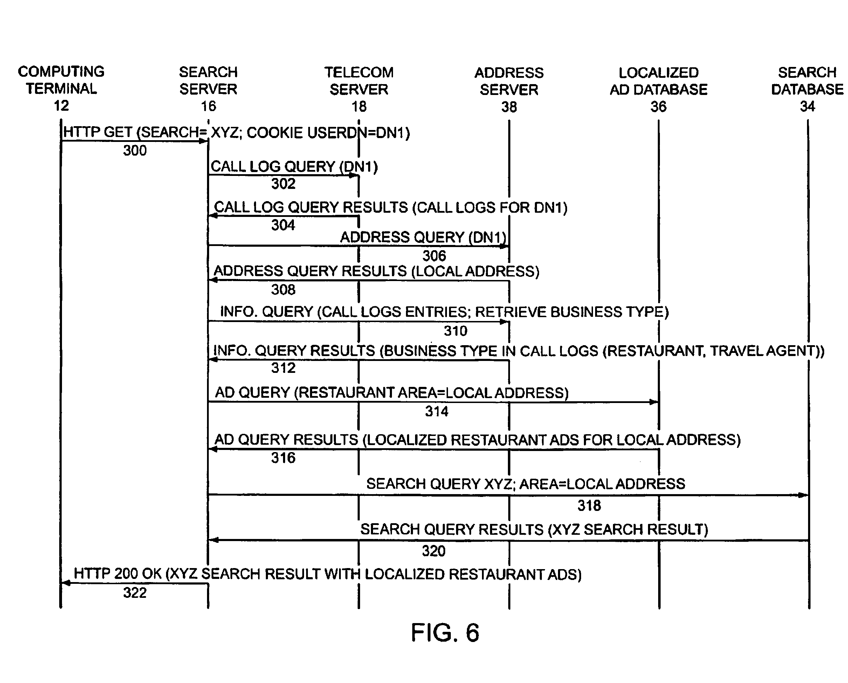

In the communication flow of Figure 6, the telecom data is obtained from call logs, which are accessible by the telecom server 18. The call logs could be stored in the telecom database 40, which in the normal course of operation keeps track of incoming and outgoing calls and the telecom data associated therewith for any number of users. Initially, assume the user enters a basic search query, which is sent to the search server 16 along with the telecom cookie information, which was described above (step 300). The search server 16 may use the telecom searching information, which includes the directory number DN1 that is associated with the user or computing terminal 12, to generate a call log query to the telecom server 18 (step 302). The telecom server 18 may obtain the call logs or access the telecom database 40 to obtain the call logs associated with directory number DN1. Once the telecom server 18 obtains the call logs for directory number DN1, the call logs are provided back to the search server 16 as call log query results (step 304).

The search server 16 may also send multiple queries to the address server 38 or related servers. In this example, the first query is an address query to obtain supplemental information in the form of local address information, which corresponds to directory number DN1. The address query is sent to the address server 38 (step 306), which will respond by identifying local address information associated with directory number DN1 and sending the address query results with the local address information to the search server 16 (step 308). Using the call log information, the search server 16 may send an information query to the address server 38 to obtain information related to the incoming or outgoing call logs (step 310). The address server 38 may use the telephony addresses associated with the originating terminals for incoming calls or the destination terminals for outgoing calls, along with any associated caller identification information, if available, to retrieve supplemental information. In this example, the supplemental information relates to the type of business associated with the telephony addresses or call identification information. Assuming the business types in the call logs are predominantly restaurants and travel agents, the address server 38 may generate information query results that indicate the business types in the call logs are restaurants and travel agents, and send the information query results back to the search server 16 (step 312).

The search server 16 may also use certain of the information query results for the business types along with the local address information to formulate an ad query, which is sent to the localized ad database 36 (step 314). The localized ad database 36 will identify any restaurant ads associated with the local address information, and send this information back to the search server 16 (step 316). Notably, any of the supplemental information above may be used to identify advertisements to present to the computing terminal 12. Finally, the search server 16 will generate a search query to send to the search database 34. This search query will take into consideration the original search query provided by the user, and any other supplemental information, such as the localized address information. When the search query is received by the search database 34 (step 318), the search database 34 will perform the requisite search and provide the search query results back to the search server 16 (step 320). The search server 16 will then generate a web page including the search results and the localized ads, which are localized restaurant ads in this example, and send the web page to the computing terminal 12 in an HTTP 200 OK message (step 322).

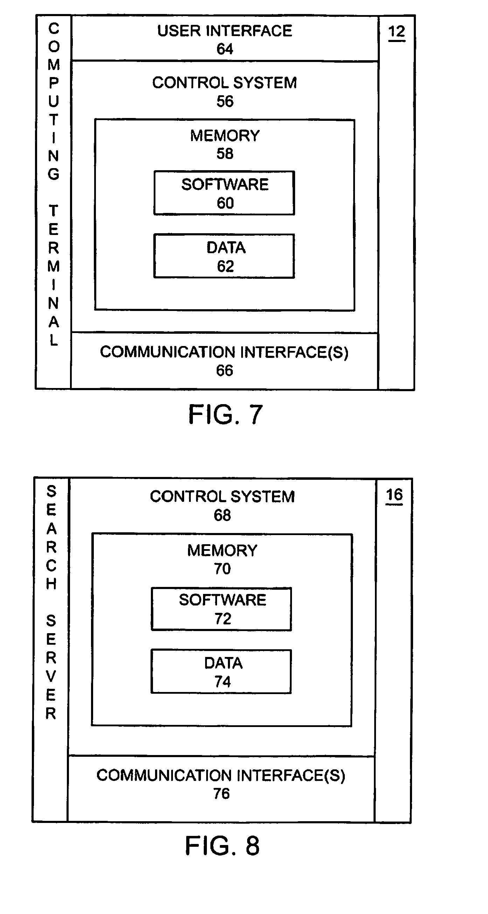

With reference to Figure 7, an exemplary computing terminal 12 is illustrated. The computing terminal 12 may include a control system 56 with sufficient memory 58 for the requisite software 60 and data 62 to operate as described above. The software 60 may support various applications supporting various electronic documents, wherein certain of the applications or electronic documents may represent a software entity. The software 60 may also support all or a portion of the communication client 14' as well as the web client 14, which may also be a software entity. The various applications may run on an appropriate operating system, which may be configured to support all or a part of the communication client 14' as well as assist in redirecting responses triggered by a user selecting a call tag to the communication client 14' for processing. The control system 56 may also be associated with an appropriate user interface 64 as well as any number of communication interfaces 66, to facilitate communications with any variety of networks, including the Internet 20, VoP network 32, and the PSTN 30.

With reference to Figure 8, an exemplary search server 16 is illustrated. The search server 16 may include a control system 68 with sufficient memory 70 for the requisite software 72 and data 74 to operate as described above. One or more communication interfaces 76 may be provided to facilitate communications with various entities, including the computing terminal 12, telecom server 18, search database 34, localized ad database 36, address server 38, service node 22, and the like. Notably, the search server 16 may take the form of any type of web server.

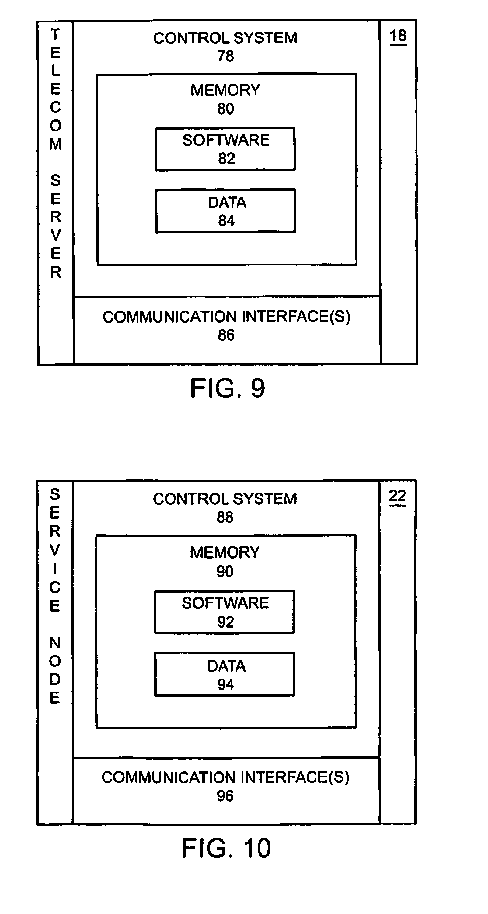

With reference to Figure 9, an exemplary telecom server 18 is illustrated. The telecom server 18 may include a control system 78 with sufficient memory 80 for the requisite software 82 and data 84 to operate as described above. One or more communication interfaces 86 may be provided to facilitate communications with various entities, including the computing terminal 12, search server 16, telecom database 40, service node 22 and the like. Notably, the telecom server 18 may take the form of any type of web server.

With reference to Figure 10, an exemplary service node 22 is illustrated. The service node 22 may include a control system 88 with sufficient memory 90 for the requisite software 92 and data 94 to operate as described above. One or more communication interfaces 96 may be provided to facilitate communications with various entities, including the computing terminal 12, search server 16, telecom server 18, as well as entities within the PSTN 30, VoP network 32, the Internet 20 and the like.

## Claims

1. A method comprising:
• receiving a web request from a computing terminal;
• accessing supplemental information based on telecom data associated with a user of the computing terminal;
• retrieving web page information in response to a search based on at least a portion of the supplemental information;
• generating a web page comprising the web page information; and
• sending the web page to the computing terminal in response to the web request.

2. The method of claim 1 wherein the web request comprises a search query and the web page information is retrieved through the search based on the search query and the at least a portion of the supplemental information.

3. The method of claim 1 wherein at least a portion of the web page information is an advertisement.

4. The method of claim 1 wherein the web request comprises a search query and the web page information is retrieved through the search based on the search query and the at least a portion of the supplemental information, the method further comprising retrieving an advertisement in response to another search based on the at least a portion of the supplemental information or another portion of the supplement information, wherein the web page is generated to comprise the web page information and the advertisement.

5. The method of claim 1 wherein the web request comprises a search query and further comprising retrieving search query results in response to a search based on the search query, wherein the web page is generated to comprise the web page information and the search query results.

6. The method of claim 1 further comprising receiving the telecom data from an entity other than the computing terminal.

7. The method of claim 1 further comprising receiving the telecom data from the computing terminal.

8. The method of claim 7 wherein the telecom data was provided to the computing terminal from a telecom server, which obtained the telecom data from the computing terminal while facilitating a click-to-call call or voice session initiated from the computing terminal.

9. The method of claim 7 wherein the telecom data is received from the computing terminal in the form of a cookie.

10. The method of claim 7 wherein the telecom data is received from the computing terminal in the web request.

11. The method of claim 1 wherein the at least a portion of the supplemental information is location information.

12. The method of claim 11 wherein the location information corresponds to a location of the user.

13. The method of claim 11 wherein the location information corresponds to a location of at least one of a party that has called the user and a party that the user has called.

14. The method of claim 1 wherein the at least a portion of the supplemental information is business type information.

15. The method of claim 1 wherein the telecom data is at least one of a group consisting of a directory number and a uniform resource locator associated with a terminal of the user.

16. The method of claim 1 wherein the telecom data is at least one of a group consisting of a directory number and a uniform resource locator associated with a terminal of at least one of the group consisting of a party that called the user or a party that the user has called.

17. The method of claim 1 wherein the telecom data comprises call log information of the user for at least one of a group consisting of incoming or outgoing calls.

18. The method of claim 1 wherein the web page information further comprises call tags from which click-to-call calls or voice sessions may be initiated.

19. A system comprising:
• at least one communication interface; and
• a control system associated with the at least one communication interface and adapted to:
• receive a web request from a computing terminal;
• access supplemental information based on telecom data associated with a user of the computing terminal;
• retrieve web page information in response to a search based on at least a portion of the supplemental information;
• generate a web page comprising the web page information; and
• send the web page to the computing terminal in response to the web request.
